# EUROPÄISCHE PATENTSCHRIFT

(11) **EP 2 813 305 B1**
(45) Veröffentlichungstag und Bekanntmachung des Hinweises auf die Patenterteilung: **23.03.2016**
(21) Anmeldenummer: 13002994.5
(22) Anmeldetag: 12.06.2013
(51) Int. Cl.: B23B 29/12, B23B 27/10, B23C 5/28, B23D 77/00, B23Q 11/10, B24B 13/04, B24B 55/02

(54) **Fast-Tool-Drehmaschine**
Fast Tool lathe
Tour Fast Tool

(43) Veröffentlichungstag der Anmeldung: 17.12.2014
(73) Patentinhaber: Satisloh AG, 6340 Baar (CH)
(72) Erfinder: Schmidt, Philipp, 35585 Wetzlar/Blasbach (DE); Wallendorf, Steffen, 35582 Wetzlar-Dutenhofen (DE)
(74) Vertreter: Oppermann, Mark

(56) Entgegenhaltungen:
- EP-A1- 1 719 584
- DE-A1-102010 038 145
- US-A1- 2001 007 215
- US-A1- 2007 283 794
- US-B1- 6 299 388
- Anonymous: "VFT-compact-pro Generating All-Format TM Lens Surfaces with High Performance Fast Tool Technlogy", satisloh , 4. Juli 2012 (2012-07-04), Seite 4pp, XP002716068, Gefunden im Internet: URL:http://www.satisloh.com/uploads/media/ Info_VFT-compact-pro_en.pdf [gefunden am 2013-11-05]

## Beschreibung

### TECHNISCHES GEBIET

Die vorliegende Erfindung bezieht sich auf eine Fast-Tool-Drehmaschine mit einer Vorrichtung für die Zufuhr eines flüssigen Kühlschmierstoffs an eine Schneide eines Drehwerkzeugs, das über einen Werkzeughalter mit einem Fast-Tool-Servo wirkverbunden ist, um gemeinsam mit dem Werkzeughalter oszillierende Bewegungen in einer Zustellrichtung ausführen zu können, gemäß dem Oberbegriff des Patentanspruchs 1. Insbesondere bezieht sich die Erfindung auf eine solche Kühlschmierstoff-Zufuhrvorrichtung, wie sie an einer Fast-Tool-Drehmaschine zur Bearbeitung von Kunststoff-Brillengläsern in sogenannten "RX-Werkstätten", d.h. Produktionsstätten zur Fertigung von individuellen Brillengläsern nach Rezept in großem Umfang zum Einsatz kommen.

### STAND DER TECHNIK

Üblicherweise liegt bei der Bearbeitung von Kunststoff-Brillengläsern ein aus Kunststoff (wie Polycarbonat, CR 39, HI-Index, etc.) gegossener Brillenglasrohling, auch "Blank" genannt, vor, der eine standardisierte endbearbeitete konvexe Außenfläche mit z.B. sphärischer oder progressiver Form aufweist. Die in der Regel konkaven Innen- bzw. Rezeptflächen erhalten mittels spanender Bearbeitung eine sphärische, asphärische, torische, atorische, progressive oder Freiformgeometrie (Gleitsichtfläche), je nach der gewünschten optischen Wirkung. Der typische konventionelle Ablauf bei der Innenflächenbearbeitung sieht nach dem Aufblocken des Brillenglasrohlings mit seiner Außenfläche auf einem Blockstück ggf. einen Fräs- und insbesondere einen Drehbearbeitungsprozess zur Herstellung der optisch aktiven Form vor, in der Regel gefolgt von einem Feinschleif- oder Polierprozess zur Erzielung der notwendigen Oberflächengüte.

Für den oben erwähnten Drehbearbeitungsprozess werden im Stand der Technik auch sogenannte Fast-Tool-Drehmaschinen eingesetzt, bei denen ein Drehmeißel entweder linear reziprozierend (siehe z.B. die Druckschrift WO-A-02/06005) oder rotativ (vgl. beispielsweise die Druckschrift WO-A-99/33611) hochdynamisch bewegt werden kann, so dass nicht-rotationssymmetrische bzw. "unrunde" Linsenflächen im Drehverfahren erzeugt werden können. Die eigentliche Drehbearbeitung, d.h. der Zerspanungsprozess erfolgt hierbei unter Zufuhr eines flüssigen Kühlschmierstoffs an die Schneide des Drehwerkzeugs. Einerseits soll der Kühlschmierstoff an der Zerspanungsstelle kühlen und schmieren, um die Standzeit des Drehwerkzeugs zu verlängern und den Vorschub zu unterstützen, andererseits soll der Kühlschmierstoff für einen optimalen Späne(ab)transport sorgen und dabei auch bei der Zerspanung entstehende, feine Werkstoffpartikel binden, die bei einer trockenen Bearbeitung aufgrund ihrer Größe als Staub lungengängig und ggf. für den Bediener gesundheitsschädlich wären.

An einer Fast-Tool-Drehmaschine werden für die Zufuhr des flüssigen Kühlschmierstoffs an die Schneide des Drehwerkzeugs im Stand der Technik zumeist sogenannte Segmentschlauchsysteme, wie das *Loc-Line*^{®} *Flexi* System der Lockwood Products, Inc., Lake Oswego, Oregon, USA (vgl. die Druckschrift EP-A-0 167 063), verwendet - siehe z.B. den den Oberbegriff des Patentanspruchs 1 bildenden Prospekt *"VFT-compact-pro"* der Satisloh AG, Baar, Schweiz auf Seite 1 (kleines Bild: orangefarbiger Segmentschlauch über dem Drehmeißel). Diese Segmentschläuche bestehen aus einzelnen speziell geformten, steifen Kunststoffsegmenten, von denen mehrere zur Ausbildung eines Segmentschlauchs von vorbestimmter Länge zusammengesteckt werden - "Segmentrohr" wäre insofern ein besserer Begriff. Die einzelnen Kunststoffsegmente sind dann gelenkig, gleichwohl positionsstabil miteinander verbunden, so dass der Segmentschlauch bezüglich des Drehmeißels ausgerichtet werden kann. Eingangsseitig ist der Segmentschlauch an einem bezüglich eines Gehäuses des Fast-Tool-Servos ortsfesten Anschluss angeschlossen, der von einer Kühlschmierstoffquelle mit dem Kühlschmierstoff versorgt werden kann. Ausgangsseitig ist der Segmentschlauch in der Regel mit einem Düsensegment versehen, das einen mit dem gehäuseseitigen Anschluss über den Segmentschlauch fluidverbundenen Auslass für die Abgabe eines Kühlschmierstoffstrahls auf den Drehmeißel bildet.

Zwar sind diese Segmentschläuche einfach mit einem Handgriff auf jede gewünschte Position einzurichten, in der sie auch sehr vibrationsunempfindlich und positionsstabil verbleiben. Die Schneide des über den Fast-Tool-Servo angetriebenen Drehmeißels bewegt sich jedoch bei einer Drehbearbeitung unrunder Linsenflächen über einen Gesamthub von max. ca. 30 mm, hochdynamisch - z.B. mit bis zu 200 Hz oder mehr oszillierend - über einen Bearbeitungshub von max. ca. 10-12 mm unter dem vom stationären Segmentschlauch abgegebenen Kühlschmierstoffstrahl weg, so dass der Kühlschmierstoffstrahl nicht immer bestmöglich auf den Ort der Zerspanung gerichtet ist. Unterschiedliche Dicken und Krümmungen der zu bearbeitenden Brillengläser erfordern zudem eine Neueinrichtung des Segmentschlauchsystems oder einen breit aufgefächerten Kühlschmierstoffstrahl, der zum überwiegenden Teil nicht auf der Eingriffsstelle des Drehmeißels auftrifft.

Aus der Druckschrift US 2001/0007215 A1 ist eine Drehmaschine bekannt, in welcher in einem Halbtrocken-Schneidprozess ein Werkstück mit einem Einpunkt-Werkzeug geschnitten werden kann, während eine Schneidflüssigkeit in Form eines ultrafeinen Nebels zugeführt wird. Dabei wird in der Nähe des Einpunkt-Werkzeugs ein Luftstrom mittels einer Absaugeinrichtung erzeugt, die dazu dient, die beim Schneiden entstehenden Späne abzusaugen. Die Drehmaschine hat einen dem Einpunkt-Werkzeug nahen Werkzeugsupport, an dem ein Verbindungsstück befestigt ist, und einen Revolverkopf, an dem ein Kuppelstück angebracht ist. Befindet sich das Einpunkt-Werkzeug in seiner Bearbeitungsposition, sind Kanalsysteme im Verbindungsstück und im Kuppelstück miteinander ausgefluchtet, so dass nahe dem Einpunkt-Werkzeug ein Absaugen der Späne erfolgen kann. Hierfür ist die Absaugeinrichtung mit dem Kanalsystem im Kuppelstück verbunden, und zwar über einen an dem Kuppelstück angeschlossenen Schlauch aus rostfreiem Stahl, der flexibel ist, so dass er den Bewegungen des Revolverkopfs folgen kann.

### AUFGABENSTELLUNG

Der Erfindung liegt die Aufgabe zugrunde, eine Fast-Tool-Drehmaschine mit einer möglichst einfach ausgebildeten Vorrichtung für die Zufuhr eines flüssigen Kühlschmierstoffs an eine Schneide eines mittels eines Fast-Tool-Servos oszillierend antreibbaren Drehwerkzeugs zu schaffen, welche Vorrichtung zuverlässig dafür sorgt, dass der Kühlschmierstoff stets bestmöglich an den Ort der Zerspanung gelangt.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 9.

Bei einer Fast-Tool-Drehmaschine mit einem Drehwerkzeug, das über einen Werkzeughalter mit einem Fast-Tool-Servo wirkverbunden ist, um gemeinsam mit dem Werkzeughalter oszillierende Bewegungen in einer Zustellrichtung ausführen zu können, und einer Vorrichtung für die Zufuhr eines flüssigen Kühlschmierstoffs an eine Schneide des Drehwerkzeugs, wobei ein bezüglich eines Gehäuses des Fast-Tool-Servos ortsfester erster Anschluss für eine Kühlschmierstoffquelle und ein mit dem ersten Anschluss fluidverbundener Auslass für die Abgabe eines Kühlschmierstoffstrahls auf das Drehwerkzeug vorgesehen sind; ist erfindungsgemäß der Auslass am Werkzeughalter vorgesehen und über einen elastischen Schlauchabschnitt mit dem ersten Anschluss fluidverbunden, wobei der Auslass durch wenigstens einen Düsenkanal im Werkzeughalter ausgebildet ist, welcher mit einer Verteilerbohrung im Werkzeughalter kommuniziert, in der ein zweiter Anschluss für den elastischen Schlauchabschnitt befestigt ist, und wobei der elastische Schlauchabschnitt länger als der größte lichte Abstand zwischen dem ersten Anschluss und dem zweiten Anschluss ist und dazwischen bogenförmig, nämlich C- oder U-förmig verläuft.

Da der Auslass der Kühlschmierstoff-Zufuhrvorrichtung am Werkzeughalter vorgesehen ist, kann der Kühlschmierstoffstrahl auf ein und dieselbe Stelle der Drehschneide gerichtet werden, so dass der Kühlschmierstoff stets in optimaler Weise an den Ort der Zerspanung gelangt, und zwar auch während die Drehschneide mittels des Fast-Tool-Servos hochdynamisch bewegt wird, wobei über den elastischen bzw. flexiblen Schlauchabschnitt, der den Oszillationsbewegungen des Werkzeughalters zu folgen vermag, die Versorgung mit dem Kühlschmierstoff immer sichergestellt ist.

Im Ergebnis werden durch unzureichende bzw. ungenaue Kühlschmierstoffzufuhr verursachte Probleme insbesondere bei der Drehbearbeitung von Kunststoff-Brillengläsern zuverlässig vermieden, und zwar unabhängig von Dicke und Krümmung des jeweils zu bearbeitenden Brillenglases, und ohne dass es hierfür irgendwelcher zeitraubender (Neu)Einrichtungs- oder Ausrichtvorgänge bedürfte, wie bei den vorbeschriebenen Segmentschlauchsystemen.

Von der Anmelderin durchgeführte Versuche haben gezeigt, dass sich die erfindungsgemäß integrierte Kühlschmierstoffzufuhr sehr positiv auf den gesamten Drehprozess auswirkt, sowohl hinsichtlich einer verbesserten Flächenqualität und Prozesssicherheit als auch im Hinblick auf eine verbesserte Späneabfuhr. Dies wiederum bringt Vorteile für den nachfolgenden Polierprozess mit sich. Da sowohl die Oberflächenrauhigkeit als auch die kinematische Rauhigkeit und Tiefe der Randzonenschädigung geringer sind, muss weniger Material abpoliert werden, so dass der nachfolgende Polierprozess verkürzt werden kann. Durch die optimierte Kühlung/Schmierung des Werkstücks in der unmittelbaren Prozesszone wird die Reibung und damit auch der Verschleiß des Drehwerkzeugs vermindert, gleichzeitig werden hohe Temperaturen und damit einhergehende Materialschädigungen im Werkstück vermieden. Auch wird ein gesteuerter Spänebruch insbesondere bei zu Fließspänen neigenden Materialien wie Polycarbonat oder bei *Trivex*^{®}-Linsen unterstützt.

Es ist ferner davon auszugehen, dass sich die optimierte Kühlschmierstoffzufuhr auch positiv auf die Prozesskräfte auswirkt. Nachdem in Fast-Tool-Drehmaschinen oftmals aerostatisch gelagerte Werkstückspindeln eingesetzt werden, die eine relativ geringe Steifigkeit besitzen, wirkt sich eine mit der optimierten Kühlung/Schmierung einhergehende Reduzierung der Schnittkräfte insbesondere in der Linsenmitte günstig aus. Die Drehbearbeitung von Brillengläsern ist im Bereich der Linsenmitte grundsätzlich problematisch, da hier die Schnittgeschwindigkeit gegen Null geht. In der Folge treten vom Drehwerkzeug ausgehend relativ hohe Axialkräfte auf, die über das Brillenglas auf die Werkstückspindel einwirken. Das Drehwerkzeug drückt in diesem Bereich des Brillenglases mehr als es schneidet. Durch das resultierende Ausweichen der verhältnismäßig weichen Werkstückspindel kann es in der Folge zu sogenannten "Center Features", d.h. kleinen Erhebungen im Bereich der Linsenachse bzw. optischen Achse kommen. Auch diese unerwünschten Defekte bzw. Topographiefehler können durch die erfindungsgemäße, geringere Schnittkräfte bedingende Kühlschmierstoffzufuhr deutlich verringert werden. Nachdem diese lokalen Flächenfehler insbesondere bei Verwendung flexibler Polierwerkzeuge nicht völlig geglättet werden können, wirkt sich die erfindungsgemäße Kühlschmierstoffzufuhr auch insofern auf den Folgeprozess des Polierens äußerst positiv aus. Durch Reduzierung der Prozesskräfte infolge verbesserter Kühlschmierstoffzufuhr und Späneabfuhr machen sich auch die in Radialrichtung auf Brillenglas und Werkstückspindel ausgeübten Kräfte sowie Nachgiebigkeiten der Werkstückspindel weniger bemerkbar, so dass insgesamt mit einer verbesserten kinematischen Rauhigkeit und einer exakter der Soll-Topographie entsprechenden gesamten Linsenfläche zu rechnen ist.

Ferner ist es im Hinblick auf die Vermeidung zusätzlicher Teile und geringe bewegte Massen sowie die Verschmutzungsproblematik von Vorteil, dass der Auslass durch den wenigstens einen Düsenkanal im Werkzeughalter ausgebildet ist, welcher mit der Verteilerbohrung im Werkzeughalter kommuniziert, in der der zweite Anschluss für den elastischen Schlauchabschnitt befestigt ist. Da darüber hinaus der elastische Schlauchabschnitt länger als der - bei maximalem Hub des Werkzeughalters - größte lichte Abstand zwischen dem ersten Anschluss und dem zweiten Anschluss ist und dazwischen bogenförmig, nämlich C- oder U-förmig verläuft, ist der elastische Schlauchabschnitt bei Hubbewegungen des Werkzeughalters nur Biegung und ggf. Torsion ausgesetzt. Dies ist einerseits im Hinblick auf die Lebensdauer des elastischen Schlauchabschnitts von Vorteil und bewirkt andererseits auch einen geringeren Widerstand gegen die Hubbewegungen des Werkzeughalters.

In zweckmäßiger Ausgestaltung kann der Düsenkanal dann mit seiner Mittelachse bezüglich eines aktiven Schneidenbereichs der Schneide ausgefluchtet sein.

Was die Geometrie des Düsenkanals angeht, kann diese den jeweiligen Zufuhrerfordernissen entsprechend z.B. zur Abgabe eines fächerförmigen Kühlschmierstoffstrahls schlitzförmig oder - bei geeigneter mehrteiliger Ausbildung des Werkzeughalters - zur Strahlbündelung konisch verlaufend ausgebildet sein. Im Hinblick auf eine einfache Herstellbarkeit durch beispielsweise Bohren bevorzugt ist es allerdings, wenn der Düsenkanal zylindrisch ist.

Ferner kann die Anordnung so getroffen sein, dass wenigstens zwei Düsenkanäle im Werkzeughalter vorgesehen sind, die bezüglich eines aktiven Schneidenbereichs der Schneide zueinander konvergierend verlaufen. Durch entsprechende Ausrichtung der Düsenkanäle kann somit ein größerer aktiver Schneidenbereich der Drehschneide mit dem Kühlschmierstoff gespült bzw. benetzt werden, was insbesondere dann von Vorteil ist, wenn Werkstückgeometrien zu bearbeiten sind, bei denen der Eingriffspunkt zwischen Drehschneide und Werkstück relativ stark entlang der Drehschneide wandert.

Insbesondere im Hinblick auf eine einfache Herstellbarkeit und kompakte Anordnung ist es des Weiteren bevorzugt, wenn es sich bei der Verteilerbohrung um eine Sackbohrung handelt, die im Wesentlichen quer zur Zustellrichtung verläuft. Der zweite Anschluss für den elastischen Schlauchabschnitt kann somit vorteilhaft seitlich am Werkzeughalter angebracht werden.

Weiterhin kann der erste und/oder der zweite Anschluss durch eine Steckverschraubung ausgebildet sein, wie sie montagefreundlich und kostengünstig im Handel erhältlich sind. Den jeweiligen Einbauerfordernissen entsprechend kann diese als gerade oder L-Steckverschraubung ausgebildet sein. Derartige Steckverschraubungen ermöglichen im Gegensatz zu Schlauchverschraubungen mit Überwurfmutter, die hier ebenfalls eingesetzt werden könnten, in vorteilhafter Weise einen sehr schnellen Wechsel des elastischen Schlauchabschnitts, der einem gewissen Verschleiß unterworfen ist.

Des Weiteren können zwei Verteilerbohrungen im Werkzeughalter ausgebildet sein, die in einer Richtung quer zur Zustellrichtung gesehen auf bezüglich der Schneide des Drehwerkzeugs gegenüberliegenden Seiten des Werkzeughalters enden, wobei am Ende der einen Verteilerbohrung der zweite Anschluss für den elastischen Schlauchabschnitt befestigt ist, während die andere Verteilerbohrung endseitig mittels eines Verschluss- bzw. Blindstopfens verschlossen ist. Bei dieser Ausgestaltung des Werkzeughalters kann der elastische Schlauchabschnitt wahlweise von der einen oder der anderen Seite an die jeweilige Verteilerbohrung angeschlossen werden, während die jeweils andere Verteilerbohrung einfach geschlossen wird, was im Hinblick auf die Einsatzflexibilität der Kühlschmierstoff-Zufuhrvorrichtung bei den verschiedensten Einbausituationen von Vorteil ist. Darüber hinaus besitzt der insofern "freigebohrte" Werkzeughalter auch nur ein sehr geringes Gewicht, was hinsichtlich geringer bewegter Massen vorteilhaft ist.

Insbesondere im Hinblick auf eine herstellungstechnisch günstige Ausgestaltung ist es ferner bevorzugt, wenn die zwei Verteilerbohrungen in einem Schnitt quer zur Zustellrichtung gesehen V-förmig angeordnet sind und dabei einen gemeinsamen Düsenkanal schneiden, der im Bereich der Spitze der V-förmigen Anordnung vorgesehen sein kann.

Schließlich kann der Düsenkanal am Auslassende mit einem auswechselbaren Düseneinsatz versehen sein. Dies ermöglicht zum einen eine einfache Reinigung des Düsenkanals; etwaige Verschmutzungen bzw. Verstopfungen können leicht entfernt werden. Zum anderen gestattet dies den Einsatz verschiedener Düsen mit den jeweiligen Strahlerfordernissen (Breite, Druck, etc.) entsprechend unterschiedlichen Düsengeometrien.

### KURZE BESCHREIBUNG DER ZEICHNUNGEN

Im Folgenden wird die Erfindung anhand bevorzugter Ausführungsbeispiele unter Bezugnahme auf die beigefügten, teilweise vereinfachten bzw. schematischen Zeichnungen näher erläutert, in denen gleiche Bezugszeichen gleiche oder entsprechende Teile kennzeichnen. In den Zeichnungen zeigen:
- Fig. 1: eine prinzipielle Vorderansicht einer Fast-Tool-Drehmaschine für Kunststoff-Brillengläser, mit einer zwischen einem Fast-Tool-Servo und einem davon angetriebenen Drehwerkzeug angeordneten, erfindungsgemäßen Kühlschmierstoff-Zufuhrvorrichtung, die an eine ebenfalls dargestellte Kühlschmierstoffquelle bzw. -versorgungseinheit angeschlossen ist;
- Fig. 2: eine abgeschnittene, perspektivische Ansicht des Fast-Tool-Servos der Fast-Tool-Drehmaschine gemäß Fig. 1 von schräg vorne/oben, an dem ein Werkzeughalter für das Drehwerkzeug montiert ist, zur Veranschaulichung weiterer Details der erfindungsgemäßen Kühlschmierstoff-Zufuhrvorrichtung nach einem ersten Ausführungsbeispiel;
- Fig. 3: eine Vorderansicht des Werkzeughalters gemäß Fig. 2 mit Teilen der erfindungsgemäßen Kühlschmierstoff-Zufuhrvorrichtung gemäß dem ersten Ausführungsbeispiel;
- Fig. 4: eine Draufsicht auf den Werkzeughalter gemäß Fig.. 2 mit Blickrichtung von oben in Fig. 3;
- Fig. 5: eine Seitenansicht des Werkzeughalters gemäß Fig. 2 mit Blickrichtung von rechts in Fig. 3, wobei der Werkzeughalter entlang eines in Fig. 3 rechten Düsenkanals der erfindungsgemäßen Kühlschmierstoff-Zufuhrvorrichtung gemäß dem ersten Ausführungsbeispiel aufgebrochen dargestellt ist;
- Fig. 6: eine Schnittansicht des Werkzeughalters gemäß Fig. 2 entsprechend der Schnittverlaufslinie VI-VI in Fig. 5;
- Fig. 7: eine perspektivische Ansicht eines anderen Werkzeughalters für das Drehwerkzeug von schräg vorne/oben, zur Veranschaulichung einer erfindungsgemäßen Kühlschmierstoff-Zufuhrvorrichtung nach einem zweiten Ausführungsbeispiel;
- Fig. 8: eine Vorderansicht des Werkzeughalters gemäß Fig. 7 mit Teilen der erfindungsgemäßen Kühlschmierstoff-Zufuhrvorrichtung gemäß dem zweiten Ausführungsbeispiel;
- Fig. 9: eine Draufsicht auf den Werkzeughalter gemäß Fig. 7 mit Blickrichtung von oben in Fig. 8;
- Fig. 10: eine Seitenansicht des Werkzeughalters gemäß Fig. 7 mit Blickrichtung von links in Fig. 8;
- Fig. 11: eine Unteransicht des Werkzeughalters gemäß Fig. 7 mit Blickrichtung von unten in Fig. 8;
- Fig. 12: eine Schnittansicht des Werkzeughalters gemäß Fig. 7 entsprechend der Schnittverlaufslinie XII-XII in Fig. 8; und
- Fig. 13: eine Schnittansicht des Werkzeughalters gemäß Fig. 7 entsprechend der Schnittverlaufslinie XIII-XIII in Fig. 10.

### DETAILLIERTE BESCHREIBUNG DER AUSFÜHRUNGSBEISPIELE

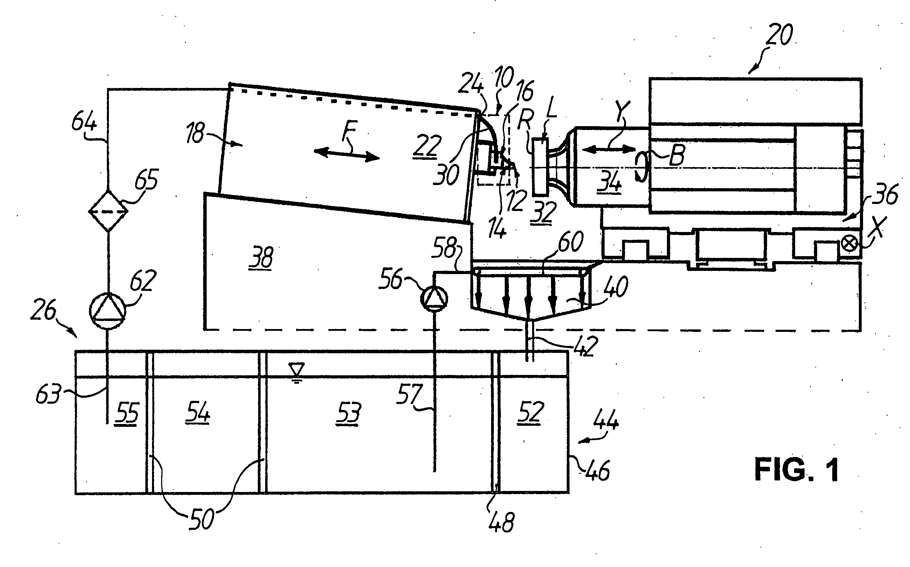

Die Fig. 1 bis 13 veranschaulichen Details einer Vorrichtung 10 für die Zufuhr eines üblicherweise bei der spanenden Bearbeitung von Kunststoff-Brillengläsern L benutzten, flüssigen Kühlschmierstoffs an eine Schneide 12 eines Drehmeißels bzw. Drehwerkzeugs 14, das über einen Werkzeughalter 16 mit einem Fast-Tool-Servo 18 einer Fast-Tool-Drehmaschine 20 wirkverbunden ist, um gemeinsam mit dem Werkzeughalter 16 oszillierende Bewegungen in einer Zustellrichtung (F-Achse) ausführen zu können. Die Kühlschmierstoff-Zufuhrvorrichtüng 10 besitzt einen bezüglich eines Gehäuses 22 des Fast-Tool-Servos 18 ortsfesten ersten Anschluss 24 für eine Kühlschmierstoffquelle 26 und einen mit dem ersten Anschluss 24 fluidverbundenen Auslass 28 für die Abgabe eines Kühlschmierstoffstrahls auf das Drehwerkzeug 14. Wesentlich ist, dass der Auslass 28 der Kühlschmierstoff-Zufuhrvorrichtung 10 am Werkzeughalter 16 vorgesehen bzw. werkzeughalterfest angeordnet und über einen elastischen Schlauchabschnitt 30 mit dem ersten Anschluss 24 fluidverbunden ist, wie nachfolgend noch näher beschrieben werden wird, so dass sich die Relativlage von Auslass 28 und Schneide 12 auch bei Hubbewegungen des Werkzeughalters 16 nicht ändert und der über den Auslass 28 abgegebene Kühlschmierstoffstrahl stets an vorbestimmter Stelle bzw. in einem definierten Bereich auf die Schneide 12 trifft.

Die in Fig. 1 in der Art einer Prinzipskizze dargestellte Fast-Tool-Drehmaschine 20 - die neben dem Fast-Tool-Servo 18 für die Drehbearbeitung des Brillenglases L auch weitere Bearbeitungseinheiten, wie eine Fräseinheit, Gravierstation, etc., ferner Mess- und Prüfstationen sowie Handhabungs- und Transporteinrichtungen für Werkzeuge und/oder Werkstücke umfassen kann (sämtlich nicht gezeigt) - soll hier nur kurz und insoweit beschrieben werden, als es für das Verständnis der vorliegenden Erfindung erforderlich erscheint. Im Übrigen wird hinsichtlich Aufbau und Funktion einer solchen Fast-Tool-Drehmaschine 20 ausdrücklich auf die Druckschrift EP-A-1 719 585 verwiesen.

Der in Fig. 1 links oben dargestellte Fast-Tool-Servo 18 wird in der Druckschrift EP-A-1 779 967 ausführlich beschrieben, auf welche an dieser Stelle im Hinblick auf Aufbau und Funktion des Fast-Tool-Servos 18 ausdrücklich Bezug genommen wird. Der Fast-Tool-Servo 18 umfasst in an sich bekannter Weise einen Aktuator, z.B. einen Tauchspulenantrieb, und einen zugeordneten Schlitten, auch "Shuttle" genannt (beides nicht dargestellt), der mittels des Aktuators in beiden Richtungen der Fast-Tool-Achse F axial bewegbar ist, wobei die Lage bzw. der Hub des Schlittens mittels CNC geregelt wird. An dem Schlitten ist der Werkzeughalter 16 auf noch zu beschreibende Weise angeflanscht.

Auf der in Fig. 1 rechten, dem Fast-Tool-Servo 18 bezüglich eines Bearbeitungsbereichs 32 der Fast-Tool-Drehmaschine 20 gegenüberliegenden Seite ist eine Werkstückspindel 34 angeordnet, an der das Brillenglas L für eine Bearbeitung seiner stirnseitigen Rezeptfläche R mit dem Drehwerkzeug 14 auf an sich bekannte Weise gespannt werden kann. Mittels der Werkstückspindel 34 ist das Brillenglas L in Drehzahl und Drehwinkel CNC-geregelt um eine Werkstück-Drehachse drehbar (B-Achse). Die Werkstückspindel 34 selbst ist mittels einer Kreuztischanordnung 36 zum einen quer zum Fast-Tool-Servo 18 in beiden Richtungen einer X-Achse und zum anderen auf den Fast-Tool-Servo 18 zu bzw. von diesem weg in beiden Richtungen einer Y-Achse CNC-lagegeregelt verstellbar. Der Fast-Tool-Servo 18 und die Kreuztischanordnung 36 für die Werkstückspindel 34 sind auf einem Maschinengestell 38 gelagert, in dem unterhalb des Bearbeitungsbereichs 32 ein beckenartiger Spanraum 40 vorgesehen ist, in den die bei der Drehbearbeitung des Brillenglases L entstehenden Späne fallen bzw. durch den Kühlschmierstoff gespült werden.

Der Spanraum 40 besitzt einen Abfluss 42, der an eine in Fig. 1 ebenfalls schematisch dargestellte Kühlschmierstoff-Aufbereitungsanlage 44 angeschlossen ist. Letztere weist ein Becken 46 zur Aufnahme des Kühlschmierstoffs auf, welches durch ein Sieb 48 und Filter 50 in Beckenbereiche 52, 53, 54, 55 unterschiedlicher Reinheit des Kühlschmierstoffs unterteilt ist. Während sich in dem in Fig. 1 rechten Beckenbereich 52 die Späne ansammeln, ist der Kühlschmierstoff in dem in Fig. 1 linken Beckenbereich 55 spanfrei, d.h. gereinigt und aufbereitet. Die Kühlschmierstoff-Aufbereitungsanlage 44 kann - wie dem Fachmann geläufig - auch eine Spänepresse, Zentrifuge, etc. umfassen; diese Bestandteile sind in Fig. 1 jedoch nicht gezeigt. Zwischen dem Sieb 48 und dem ersten Filter 50 ist eine Spülpumpe 56 über eine Ansaugleitung 57 an die Kühlschmierstoff-Aufbereitungsanlage 44 angeschlossen. Der Pumpenausgang der Spülpumpe 56 ist über eine Druckleitung 58 mit einem in einem oberen Bereich des Spanraums 40 angebrachten ringförmigen Spüldüsenabschnitt 60 hydraulisch verbunden, welcher der Spülung des Spanraums 40 dient, wie Pfeile in Fig. 1 andeuten.

Eine weitere Kühlschmierstoffpumpe 62 ist dem in Fig. 1 linken Beckenbereich 55 des Beckens 46 zugeordnet, um daraus als Bestandteil der hier gezeigten Kühlschmierstoffquelle 26 Kühlschmierstoff über eine Ansaugleitung 63 ansaugen und über eine weitere in Fig. 1 schematisch eingezeichnete Druckleitung 64 (im Fast-Tool-Servo 18 gestrichelt dargestellt) dem ersten Anschluss 24 der Kühlschmierstoff-Zufuhrvorrichtung 10 zuzuführen. Im dargestellten Ausführungsbeispiel ist in der Druckleitung 64 ein Feinstfilter 65 vorgesehen, um etwaigen Verstopfungen in der Kühlschmierstoff-Zufuhrvorrichtung 10 vorzubeugen. Alternativ oder zusätzlich könnte hier auch mit frischem Kühlschmierstoff, ggf. sogar Frischwasser gearbeitet werden, wodurch auch Flüssigkeitsverluste ausgeglichen werden könnten.

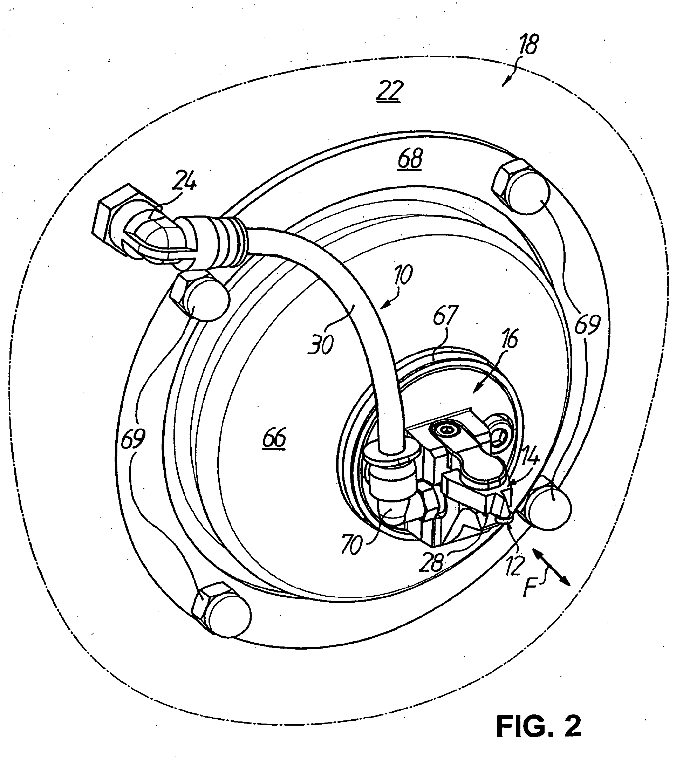

Der Fig. 2 ist zunächst zu entnehmen, dass der Werkzeughalter 16 abgedichtet am Schlitten des Fast-Tool-Servos 18 angebracht ist. Hierfür ist ein Faltenbalg 66 vorgesehen, der einerseits mit einer Schelle 67 am bewegten Werkzeughalter 16 befestigt und andererseits mittels eines Befestigungsrings 68, gehäuseseitigen Gewindestangen (nicht gezeigt) und damit eingreifenden Hutmuttern 69 stirnseitig am stationären Gehäuse 22 des Fast-Tool-Servos 18 angeschraubt ist.

Wie in Fig. 2 weiterhin gut zu erkennen ist, ist der elastische Schlauchabschnitt 30 über einen zweiten Anschluss 70 am Werkzeughalter 16 angeschlossen. Hierbei ist die Schlauchlänge derart bemessen, dass der elastische Schlauchabschnitt 30 länger als der - sich bei ausgefahrenem Fast-Tool-Servo 18 (Werkzeughalter 16 in vorderster Stellung) einstellende - größte lichte Abstand zwischen dem ersten Anschluss 24 und dem zweiten Anschluss 70 ist und dazwischen in der Form eines Bogens verläuft, so dass der elastische Schlauchabschnitt 30 der Kühlschmierstoff-Zufuhrvorrichtung 10 bei Hubbewegungen des Werkzeughalters 16 nicht elastisch gelängt wird, sondern nur einer wechselnden Biege- und ggf. Torsionsbeanspruchung unterworfen ist. Diese Belastungen soll der elastische Schlauchabschnitt 30 möglichst lange ohne Schaden überstehen, wodurch sich relativ hohe Anforderungen an insbesondere die Dauerbiegefestigkeit und die Knickunempfindlichkeit ergeben. Darüber hinaus muss der elastische Schlauchabschnitt 30 hinreichend flexibel sein, so dass er den oszillierenden Hubbewegungen des Werkzeughalters 16 nur einen möglichst geringen Widerstand entgegensetzt. Auch muss der elastische Schlauchabschnitt 30 ausreichend chemisch beständig gegen Bestandteile üblicher Kühlschmierstoffe (z.B. Glykoläthylen und Öle) sein. In Versuchen hat sich gezeigt, dass Schläuche aus Polyether-Polyurethan, wie sie z.B. von der Eisele Pneumatics GmbH + Co. KG, Waiblingen, Deutschland unter der Bezeichnung *"ProWeld Typ 99118 (0604) außenkalibriert"* (Außendurchmesser 6 mm / Innendurchmesser 4 mm) vertrieben werden, diesen Anforderungen sehr gut genügen.

Bei den Anschlüssen 24 und 70 für den elastischen Schlauchabschnitt 30 handelt es sich im dargestellten Ausführungsbeispiel um handelsübliche Steckverschraubungen. Die hier gezeigten, um 360° schwenkbaren L-Steckverschraubungen sind beispielsweise unter der Bezeichnung *"QSM*/*QSM-B, Quick Star, Mini"* mit der Artikel-Nr. *"QSML-M5-6"* bzw. *"QSML-B-M5-6-20"* von der Festo AG & Co. KG, Esslingen, Deutschland erhältlich.

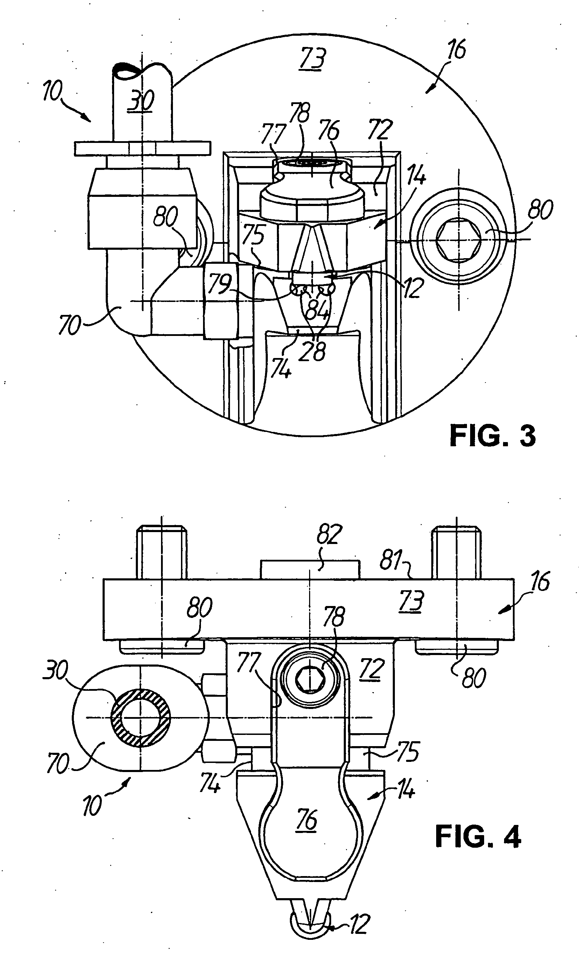

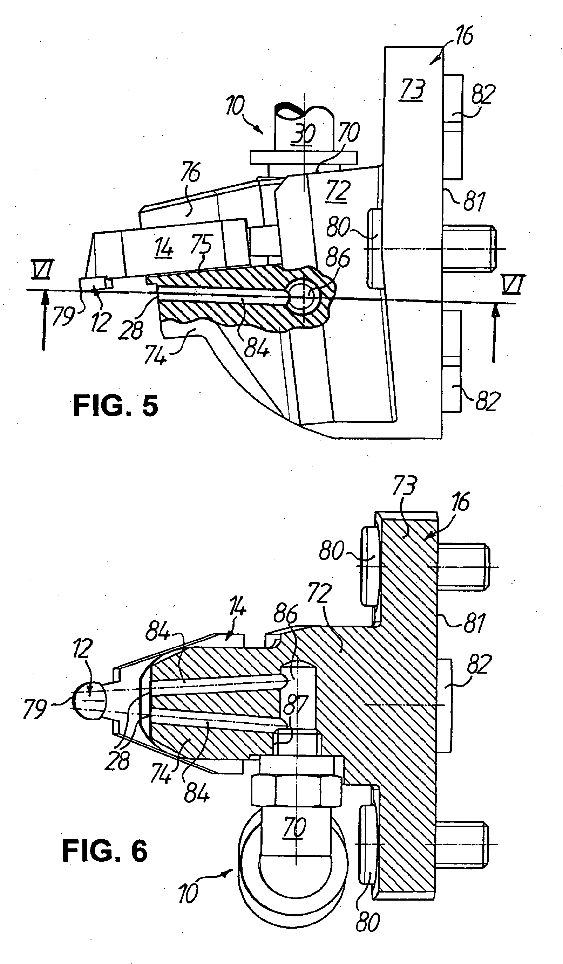

Weitere Details des Werkzeughalters 16 bei der Kühlschmierstoff-Zufuhrvorrichtung 10 gemäß dem ersten Ausführungsbeispiel sind den Fig. 3 bis 6 zu entnehmen. Der Werkzeughalter 16 besitzt hier einen im Wesentlichen quaderförmigen Grundkörper 72, an den sich in Richtung des Fast-Tool-Servos 18 ein in der Vorderansicht (Fig. 3) gesehen kreisrunder Flanschabschnitt 73 zur Befestigung des Werkzeughalters 16 am Schlitten des Fast-Tool-Servos 18 anschließt. Auf der vom Flanschabschnitt 73 abgewandten Seite des Grundkörpers 72 geht Letzterer in einen zungenförmigen Auflagerabschnitt 74 über, der eine in den Fig. 3 und 5 obere, ebene, bezüglich der Zustellrichtung F nach vorne etwas abfallende Auflagefläche 75 für das Drehwerkzeug 14 ausbildet.

Bei diesem Ausführungsbeispiel ist das Drehwerkzeug 14 mittels einer Spannpratze 76 von oben auf die Auflagefläche 75 des Auflagerabschnitts 74 gespannt. Die Spannpratze 76 sitzt hierbei in einer Aufnahmeaussparung 77 des Grundkörpers 72 und ist mit dem Grundkörper 72 in einer für Spannpratzen üblichen Art und Weise mittels einer Klemmschraube 78 mit Differentialgewinde verschraubt. Das Drehwerkzeug 14 kann somit nach Lösen der Klemmschraube 78 auf einfache Weise gewechselt werden. Das Drehwerkzeug 14 selbst ist an sich bekannt; die Schneide 12 bzw. das Schneidplättchen ist hieran ggf. lösbar oder als Beschichtung angebracht, bildet eine Schneidkante 79 als aktiven Schneidenbereich aus und kann den jeweiligen Erfordernissen entsprechend, insbesondere spezifisch für den zu bearbeitenden Werkstoff, aus polykristallinem Diamant (PKD), CVD, Naturdiamant oder aber auch Hartmetall mit oder ohne Verschleißschutz-Beschichtung bestehen. Das Drehwerkzeug 14 ist schließlich auch formschlüssig auf der Auflagefläche 75 des Auflagerabschnitts 74 zentriert; die entsprechenden, dem Fachmann geläufigen Maßnahmen sind hier aber nicht gezeigt.

Der Flanschabschnitt 73 ist auf bezüglich des Grundkörpers 72 diametral gegenüberliegenden Seiten jeweils mit einer durchgehenden, gestuften Befestigungsbohrung versehen, die von einer Schraube 80 durchgriffen wird, deren Kopf auf der Stufe der Bohrung aufliegt (nicht dargestellt). Diese Schrauben 80 werden zur Montage des Werkzeughalters 16 am Fast-Tool-Servo 18 in zugeordnete Gewindebohrungen (nicht gezeigt) im Schlitten des Fast-Tool-Servos 18 eingeschraubt. Auf der vom Drehwerkzeug 14 abgewandten Rückseite 81 des Werkzeughalters 16 sind schließlich zwei Führungsvorsprünge 82 vorgesehen, die in an sich bekannter Weise dazu dienen, den Werkzeughalter 16 bezüglich des Schlittens des Fast-Tool-Servos 18 auszurichten bzw. zu zentrieren.

Wie im Aufbruch gemäß Fig. 5 und im Schnitt nach Fig. 6 zu sehen ist, wird der der Schneide 12 des Drehwerkzeugs 14 gegenüberliegende Auslass 28 der Kühlschmierstoff-Zufuhrvorrichtung 10 durch wenigstens einen, im dargestellten Ausführungsbeispiel zwei Düsenkanäle 84 ausgebildet, die hier zylindrisch geformt sind und sich durch den Auflagerabschnitt 74 des Werkzeughalters 16 hindurch erstrecken. Die Düsenkanäle 84 enden in und kommunizieren mit einer Verteilerbohrung 86 im Grundkörper 72 des Werkzeughalters 16, in der gemäß Fig. 6 der zweite Anschluss 70 für den elastischen Schlauchabschnitt 30 befestigt, nämlich eingeschraubt ist, wozu die Verteilerbohrung 86 an ihrem offenen Ende einen Gewindeabschnitt 87 aufweist. In Fig. 6 ist auch zu erkennen, dass es sich bei der Verteilerbohrung 86 um eine Sackbohrung handelt, die im Wesentlichen quer zur Zustellrichtung (F-Achse) verläuft. Gemäß den Fig. 5 und 6 sind die Düsenkanäle 84 mit ihren Mittelachsen bezüglich des durch die Schneidkante 79 gebildeten aktiven Schneidenbereichs der Schneide 12 ausgefluchtet bzw. zielen von schräg unten auf diesen. Wie ferner die Fig. 6 zeigt verlaufen die zwei Düsenkanäle 84 hierbei bezüglich des aktiven Schneidenbereichs der Schneide 12 zueinander konvergierend, so dass die bogenförmige Schneidkante 79 der Schneide 12 über einen relativ großen Winkelbereich von den über die einzelnen Düsenkanäle 84 abgegebenen Kühlschmierstoff(teil)strahlen getroffen, gespült und gekühlt wird. Dieser effiziente Spül- und Kühleffekt im Bereich der eigentlichen Prozesszone ist unabhängig von der Hubstellung des Werkzeughalters 16, weil sich die Relativlage der Schneide 12 bezüglich der Düsenkanäle 84 über dem Hub des Fast-Tool-Servos 18 nicht verändert.

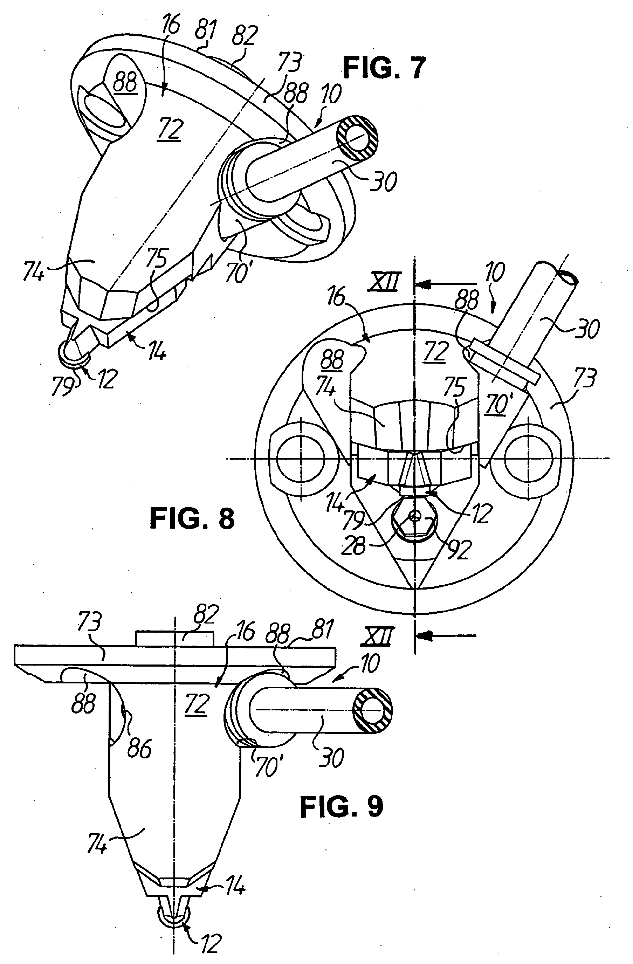

Die Fig. 7 bis 13 zeigen einen Werkzeughalter 16 bei einem zweiten Ausführungsbeispiel der Kühlschmierstoff-Zufuhrvorrichtung 10, das nachfolgend nur insoweit erläutert werden soll, als es sich wesentlich von dem vorbeschriebenen ersten Ausführungsbeispiel unterscheidet.

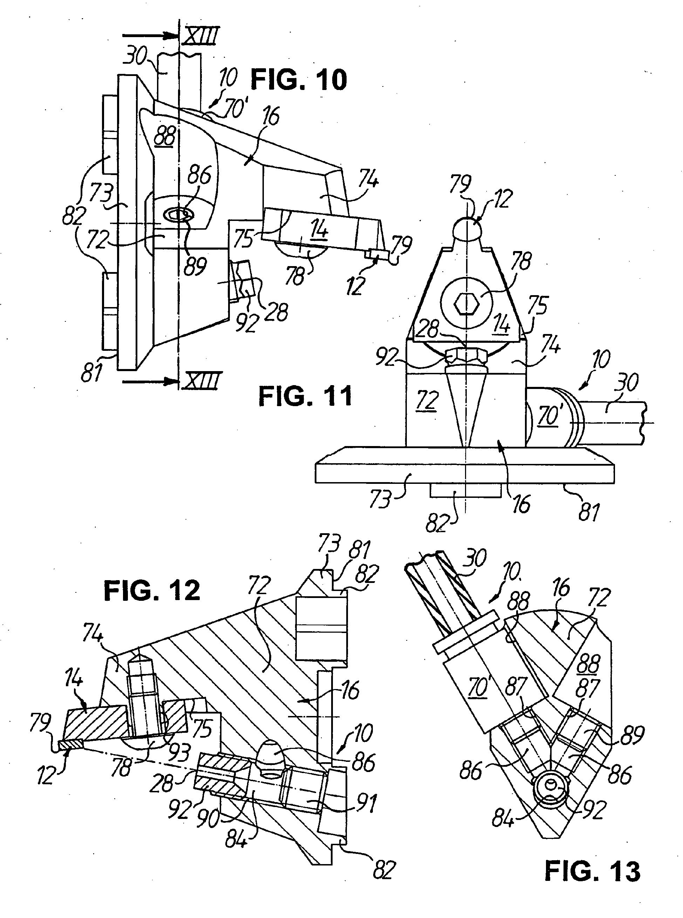

Zunächst weist der Grundkörper 72 des z.B. aus einem rostfreien Edelstahl bestehenden Werkzeughalters 16 beim zweiten Ausführungsbeispiel durch geeignete äußere Formgebung, insbesondere das Vorsehen giebelartiger Abschrägungen in einem unteren Bereich (vgl. die Fig. 8 und 13) wesentlich weniger Material auf als der Grundkörper beim ersten Ausführungsbeispiel, so dass hier eine deutlich geringere Masse von dem Fast-Tool-Servo 18 zu bewegen ist.

Dann sind im Grundkörper 72 des Werkzeughalters 16 zwei Verteilerbohrungen 86 ausgebildet, die in einer Richtung quer zur Zustellrichtung (F-Achse) gesehen auf bezüglich der Schneide 12 des Drehwerkzeugs 14 gegenüberliegenden Seiten des Werkzeughalters 16 in zueinander spiegelsymmetrisch angeordneten, zylindrischen Aussparungen 88 des Grundkörpers 72 enden bzw. münden (siehe insbesondere die Fig. 8, 9 und 13). Wie am besten in den Fig. 8 und 13 zu erkennen ist sind die zwei als Sackbohrungen ausgebildeten Verteilerbohrungen 86 - ebenso wie die Aussparungen 88 - in einem Schnitt quer zur Zustellrichtung (F-Achse) gesehen V-förmig angeordnet und schneiden im Fuß des "V", d.h. in einem in diesen Figuren unteren Bereich einen gemeinsamen Düsenkanal 84. Am offenen Ende der einen Verteilerbohrung 86 ist der zweite Anschluss 70' für den elastischen Schlauchabschnitt 30 befestigt - hier eine gerade Steckverschraubung, wie sie etwa unter der Bezeichnung *"QSM, Quick Star, Mini"* mit der Artikel-Nr. *"QSM-M5-6-I"* von der Festo AG & Co. KG, Esslingen, Deutschland erhältlich ist - während die andere Verteilerbohrung 86 endseitig mittels eines in den Gewindeabschnitt 87 eingeschraubten Verschlussstopfens 89 verschlossen ist. Es ist ersichtlich, dass der zweite Anschluss 70' und der Verschlussstopfen 89 wechselseitig austauschbar sind, so dass der elastische Schlauchabschnitt 30 von der einen oder der anderen Seite an dem Werkzeughalter 16 angeschlossen werden kann.

Der Düsenkanal 84 ist ebenfalls im Grundkörper 72 des Werkzeughalters 16 ausgebildet, und zwar als schräg verlaufende, auf die Schneide 12 des Drehwerkzeugs 14 "zielende" Durchgangsbohrung (vgl. Fig. 12), die durchgehend mit einem Innengewinde 90 versehen ist. Das in Fig. 12 rechte, untere Ende des Düsenkanals 84 ist mit einem in das Innengewinde 90 eingeschraubten Blindstopfen 91 verschlossen, während in das in Fig. 12 linke, obere Auslassende des Düsenkanals 84 ein auswechselbarer Düseneinsatz 92 eingeschraubt ist. Letzterer kann z.B. durch eine geeignet aufgebohrte - Bohrungsdurchmesser z.B. zwischen 1,5 und 3 mm - Madenschraube ausgebildet sein. Es kann sich hier aber auch um eine handelsübliche Hochdruckdüse handeln, wie sie beispielsweise unter der Bezeichnung *"Keramik Hochdruckdüse 078 K M6"* von der Teschke GmbH, WHD-Shop.de, Duisburg, Deutschland erhältlich ist. Für den Fachmann ist ersichtlich, dass den jeweiligen Strahlerfordernissen entsprechend (Druck, Breite, Höhe, etc.) die Düsengeometrie von der hier gezeigten zylindrischen Geometrie abweichen, etwa schlitzförmig oder mit einem ovalen Querschnitt versehen sein kann.

Schließlich ist zum zweiten Ausführungsbeispiel noch zu erwähnen, dass das Drehwerkzeug 14 in anderer Weise am Werkzeughalter 16 befestigt ist, nämlich von unten an einem sich oben nach vorne vom Grundkörper 72 wegerstreckenden Auflagerabschnitt 74, der die Prozesskräfte somit direkt, ohne zwischengefügte Spannpratze aufnimmt. Hierbei ist das Drehwerkzeug 14 gemäß Fig. 12 über einen Zentrierbund 93 an der Auflagefläche 75 des Auflagerabschnitts 74 zentriert und direkt mittels einer Klemmschraube 78 - hier eine flache Linsenkopfschraube - gegen die Auflagefläche 75 gespannt.

Eine Vorrichtung für die Zufuhr eines flüssigen Kühlschmierstoffs an eine Schneide eines Drehwerkzeugs, das über einen Werkzeughalter mit einem Fast-Tool-Servo wirkverbunden ist, um gemeinsam mit dem Werkzeughalter oszillierende Bewegungen in einer Zustellrichtung ausführen zu können, umfasst einen bezüglich eines Gehäuses des Fast-Tool-Servos ortsfesten ersten Anschluss für eine Kühlschmierstoffquelle und einen mit dem ersten Anschluss fluidverbundenen Auslass für die Abgabe eines Kühlschmierstoffstrahls auf das Drehwerkzeug. Der Auslass ist am Werkzeughalter vorgesehen und über einen elastischen Schlauchabschnitt mit dem ersten Anschluss fluidverbunden, so dass der über den Auslass abgegebene Kühlschmierstoffstrahl auch bei Hubbewegungen des Werkzeughalters stets an vorbestimmter Stelle auf die Schneide des Drehwerkzeugs trifft.

### BEZUGSZEICHENLISTE

- 10: Kühlschmierstoff-Zufuhrvorrichtung
- 12: Schneide
- 14: Drehwerkzeug
- 16: Werkzeughalter
- 18: Fast-Tool-Servo
- 20: Fast-Tool-Drehmaschine
- 22: Gehäuse
- 24: erster Anschluss
- 26: Kühlschmierstoffquelle
- 28: Auslass
- 30: elastischer Schlauchabschnitt
- 32: Bearbeitungsbereich
- 34: Werkstückspindel
- 36: Kreuztischanordnung
- 38: Maschinengestell
- 40: Spanraum
- 42: Abfluss
- 44: Kühlschmierstoff-Aufbereitungsanlage
- 46: Becken
- 48: Sieb
- 50: Filter
- 52: Beckenbereich
- 53: Beckenbereich
- 54: Beckenbereich
- 55: Beckenbereich
- 56: Spülpumpe
- 57: Ansaugleitung
- 58: Druckleitung
- 60: Spüldüsenabschnitt
- 62: Kühlschmierstoffpumpe
- 63: Ansaugleitung
- 64: Druckleitung
- 65: Feinstfilter
- 66: Faltenbalg
- 67: Schelle
- 68: Befestigungsring
- 69: Hutmutter
- 70, 70': zweiter Anschluss
- 72: Grundkörper
- 73: Flanschabschnitt
- 74: Auflagerabschnitt
- 75: Auflagefläche
- 76: Spannpratze
- 77: Aufnahmeaussparung
- 78: Klemmschraube
- 79: Schneidkante / aktiver Schneidenbereich
- 80: Schraube
- 81: Rückseite
- 82: Führungsvorsprung
- 84: Düsenkanal
- 86: Verteilerbohrung
- 87: Gewindeabschnitt
- 88: Aussparung
- 89: Verschlussstopfen
- 90: Innengewinde
- 91: Blindstopfen
- 92: Düseneinsatz
- 93: Zentrierbund

- B: Werkstück-Drehachse (winkellagegeregelt)
- F: Linearachse Fast-Tool (lagegeregelt) / Zustellrichtung
- L: Brillenglas
- R: Rezeptfläche des Brillenglases
- X: Linearachse Werkstück (lagegeregelt)
- Y: Linearachse Werkstück (lagegeregelt)

## Patentansprüche

1. Fast-Tool-Drehmaschine (20) mit einem Drehwerkzeug (14), das über einen Werkzeughalter (16) mit einem Fast-Tool-Servo (18) wirkverbunden ist, um gemeinsam mit dem Werkzeughalter (16) oszillierende Bewegungen in einer Zustellrichtung (F) ausführen zu können, und einer Vorrichtung (10) für die Zufuhr eines flüssigen Kühlschmierstoffs an eine Schneide (12) des Drehwerkzeugs (14), wobei ein bezüglich eines Gehäuses (22) des Fast-Tool-Servos (18) ortsfester erster Anschluss (24) für eine Kühlschmierstoffquelle (26) und ein mit dem ersten Anschluss (24) fluidverbundener Auslass (28) für die Abgabe eines Kühlschmierstoffstrahls auf das Drehwerkzeug (14) vorgesehen sind, **dadurch gekennzeichnet, dass** der Auslass (28) am Werkzeughalter (16) vorgesehen und über einen elastischen Schlauchabschnitt (30) mit dem ersten Anschluss (24) fluidverbunden ist, wobei der Auslass (28) durch wenigstens einen Düsenkanal (84) im Werkzeughalter (16) ausgebildet ist, welcher mit einer Verteilerbohrung (86) im Werkzeughalter (16) kommuniziert, in der ein zweiter Anschluss (70, 70') für den elastischen Schlauchabschnitt (30) befestigt ist, und wobei der elastische Schlauchabschnitt (30) länger als der größte lichte Abstand zwischen dem ersten Anschluss (24) und dem zweiten Anschluss (70, 70') ist und dazwischen bogenförmig, nämlich C- oder U-förmig verläuft.

2. Fast-Tool-Drehmaschine (20) nach Anspruch 1, **dadurch gekennzeichnet, dass** der Düsenkanal (84) mit seiner Mittelachse bezüglich eines aktiven Schneidenbereichs (79) der Schneide (12) ausgefluchtet ist.

3. Fast-Tool-Drehmaschine (20) nach Anspruch 1 oder 2, **dadurch gekennzeichnet, dass** der Düsenkanal (84) zylindrisch ist.

4. Fast-Tool-Drehmaschine (20) nach einem der Ansprüche 1 bis 3, **dadurch gekennzeichnet, dass** wenigstens zwei Düsenkanäle (84) im Werkzeughalter (16) vorgesehen sind, die bezüglich eines aktiven Schneidenbereichs (79) der Schneide (12) zueinander konvergierend verlaufen.

5. Fast-Tool-Drehmaschine (20) nach einem der Ansprüche 1 bis 4, **dadurch gekennzeichnet, dass** es sich bei der Verteilerbohrung (86) um eine Sackbohrung handelt, die im Wesentlichen quer zur Zustellrichtung (F) verläuft.

6. Fast-Tool-Drehmaschine (20) nach einem der Ansprüche 1 bis 5, **dadurch gekennzeichnet, dass** der erste und/oder der zweite Anschluss (24, 70, 70') durch eine Steckverschraubung ausgebildet sind.

7. Fast-Tool-Drehmaschine (20) nach einem der Ansprüche 1 bis 6, **dadurch gekennzeichnet, dass** zwei Verteilerbohrungen (86) im Werkzeughalter (16) ausgebildet sind, die in einer Richtung quer zur Zustellrichtung (F) gesehen auf bezüglich der Schneide (12) des Drehwerkzeugs (14) gegenüberliegenden Seiten des Werkzeughalters (16) enden, wobei am Ende der einen Verteilerbohrung (86) der zweite Anschluss (70') für den elastischen Schlauchabschnitt (30) befestigt ist, während die andere Verteilerbohrung (86) endseitig mittels eines Verschlussstopfens (89) verschlossen ist.

8. Fast-Tool-Drehmaschine (20) nach Anspruch 7, **dadurch gekennzeichnet, dass** die zwei Verteilerbohrungen (86) in einem Schnitt quer zur Zustellrichtung (F) gesehen V-förmig angeordnet sind und einen gemeinsamen Düsenkanal (84) schneiden.

9. Fast-Tool-Drehmaschine (20) nach einem der Ansprüche 1 bis 8, **dadurch gekennzeichnet, dass** der Düsenkanal (84) am Auslassende mit einem auswechselbaren Düseneinsatz (92) versehen ist.

## Claims

1. Fast-tool lathe (20) comprising a lathe tool (14) which is operatively connected by way of a tool holder (16) with a fast-tool servo (18) so as to be able to execute oscillating movements in an advance direction (F) in common with the tool holder (16), and a device (10) for supplying a liquid cooling lubricant to a cutting edge (12) of the lathe tool (14), wherein a first connection (24), which is stationary with respect to a housing (22) of the fast-tool servo (18), for a cooling lubricant source (26) and an outlet (28), which is in fluid connection with the first connection (24), for delivery of a cooling lubricant jet to the lathe tool (14) are provided, **characterized in that** the outlet (28) is provided at the tool holder (16) and is in fluid connection with the first connection (24) by way of a resilient hose portion (30), wherein the outlet (28) is formed by at least one nozzle channel (84) in the tool holder (16), which nozzle channel communicates with a distributor bore (86), in which a second connection (70, 70') for the resilient hose portion (30) is secured, in the tool holder (16), and wherein the resilient hose portion (30) is longer than the largest clear spacing between the first connection (24) and the second connection (70, 70') and extends therebetween in a curved shape, namely Cor U-shaped.

2. Fast-tool lathe (20) according to claim 1, **characterized in that** the nozzle channel (84) is aligned by the center axis thereof with respect to an active cutting edge region (79) of the cutting edge (12).

3. Fast-tool lathe (20) according to claim 1 or 2, **characterized in that** the nozzle channel (84) is cylindrical.

4. Fast-tool lathe (20) according to any one of claims 1 to 3, **characterized in that** at least two nozzle channels (84) are provided in the tool holder (16) and extend convergently towards one another with respect to an active cutting edge region (79) of the cutting edge (12).

5. Fast-tool lathe (20) according to any one of claims 1 to 4, **characterized in that** the distributor bore (86) is a blind bore extending substantially transversely to the advance direction (F).

6. Fast-tool lathe (20) according to any one of claims 1 to 5, **characterized in that** the first connection (24) and/or the second connection (70, 70') is or are formed by a push-in fitting.

7. Fast-tool lathe (20) according to any one of claims 1 to 6, **characterized in that** two distributor bores (86) are provided in the tool holder (16) and as seen in a direction transverse to the advance direction (F) end on sides of the tool holder (16) which are opposite with respect to the cutting edge (12) of the lathe tool (14), wherein the second connection (70') for the resilient hose portion (30) is attached at the end of one distributor bore (86), whereas the other distributor bore (86) is closed at the end by means of a closure plug (89).

8. Fast-tool lathe (20) according to claim 7, **characterized in that** the two distributor bores (86) are arranged in V-shape as seen in a section transverse to the advance direction (F) and intersect a common nozzle channel (84).

9. Fast-tool lathe (20) according to any one of claims 1 to 8, **characterized in that** the nozzle channel (84) is provided at the outlet end with an exchangeable nozzle insert (92).

## Revendications

1. Tour d'usinage à outil rapide (fast-tool) (20) comprenant un outil de tournage (14) qui est relié de manière interactive, par l'intermédiaire d'un porte-outil (16), à un mécanisme d'assistance d'outil rapide (18) en vue de pouvoir effectuer en commun avec le porte-outil (16), des mouvements d'oscillation dans une direction de prise de passe (F), et comprenant également un dispositif (10) pour l'amenée d'un lubrifiant de refroidissement liquide à une plaquette de coupe (12) de l'outil de tournage (14), tour d'usinage dans lequel sont prévus un premier raccord de branchement (24) en position fixe par rapport à un carter (22) du mécanisme d'assistance d'outil rapide (18) et destiné à une source de lubrifiant de refroidissement (26), ainsi qu'une sortie (28) reliée de manière fluidique au premier raccord de branchement (24), pour la distribution d'un jet de lubrifiant de refroidissement sur l'outil de tournage (14),
**caractérisé en ce que** la sortie (28) est prévue sur le porte-outil (16) et est reliée de manière fluidique au premier raccord de branchement (24) par l'intermédiaire d'un tronçon de tuyau élastique (30), **en ce que** la sortie (28) est réalisée par au moins un canal de buse (84) dans le porte-outil (16), qui communique avec un alésage de distribution (86) dans le porte-outil (16) dans lequel est fixé un deuxième raccord de branchement (70, 70') pour le tronçon de tuyau élastique (30), et **en ce que** le tronçon de tuyau élastique (30) est plus long que la distance libre la plus grande entre le premier raccord de branchement (24) et le deuxième raccord de branchement (70, 70') et s'étend en forme d'arc entre les deux, à savoir en forme de C ou de U.

2. Tour d'usinage à outil rapide (20) selon la revendication 1, **caractérisé en ce que** le canal de buse (84) est aligné avec son axe central sur une zone de coupe active (79) de la plaquette de coupe (12).

3. Tour d'usinage à outil rapide (20) selon la revendication 1 ou la revendication 2, **caractérisé en ce que** le canal de buse (84) est cylindrique.

4. Tour d'usinage à outil rapide (20) selon l'une des revendications 1 à 3, **caractérisé en ce que** sont prévus au moins deux canaux de buse (84) dans le porte-outil (16), qui s'étendent de manière à converger l'un vers l'autre en direction d'une zone de coupe active (79) de la plaquette de coupe (12).

5. Tour d'usinage à outil rapide (20) selon l'une des revendications 1 à 4, **caractérisé en ce que** concernant l'alésage de distribution (86), il s'agit d'un alésage borgne, qui s'étend sensiblement de manière transversale à la direction de prise de passe (F).

6. Tour d'usinage à outil rapide (20) selon l'une des revendications 1 à 5, **caractérisé en ce que** le premier et/ou le deuxième raccord de branchement (24, 70, 70') sont formés par des raccords enfichables vissés.

7. Tour d'usinage à outil rapide (20) selon l'une des revendications 1 à 6, **caractérisé en ce que** dans le porte-outil (16) sont prévus deux alésages de distribution (86), qui, vu dans une direction transversale à la direction de prise de passe (F), se terminent sur des côtés opposés du porte-outil (16) en se référant à la plaquette de coupe (12) de l'outil de tournage (14), et **en ce qu'**à l'extrémité de l'un des alésages de distribution (86) est fixé le deuxième raccord de branchement (70') pour le tronçon de tuyau élastique (30), tandis que l'autre alésage de distribution (86) est fermé à l'extrémité au moyen d'un bouchon d'obturation (89).

8. Tour d'usinage à outil rapide (20) selon la revendication 7, **caractérisé en ce que** les deux alésages de distribution (86), vus dans une coupe transversalement à la direction de prise de passe (F), sont agencés en forme de V et coupent un canal de buse (84) commun.

9. Tour d'usinage à outil rapide (20) selon l'une des revendications 1 à 8, **caractérisé en ce que** le canal de buse (84) est équipé, à l'extrémité de sortie, d'un insert de buse (92) interchangeable.
